(19) Europäisches Patentamt
European Patent Office
Office européen des brevets

(11) EP 2 151 882 B1

(12) **EUROPEAN PATENT SPECIFICATION**

(45) Date of publication and mention of the grant of the patent:
**07.09.2011 Bulletin 2011/36**

(51) Int Cl.:
***H01M 10/42*** *(2006.01)* ***H01M 10/0525*** *(2010.01)*
***H01M 10/0567*** *(2010.01)*

(21) Application number: **09166134.8**

(22) Date of filing: **22.07.2009**

(54) **Electrolyte and Lithium Ion Secondary Battery Including the Same**

Elektrolyt und Lithiumion-Sekundärbatterie damit

Électrolyte et batterie secondaire au lithium-ion le comportant

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.07.2008 KR 20080074314**

(43) Date of publication of application:
**10.02.2010 Bulletin 2010/06**

(73) Proprietor: **Samsung SDI Co., Ltd.**
**Gyeonggi-do (KR)**

(72) Inventors:
- **Choi, Namsoon**
  **Gyeonggi-do (KR)**
- **Profatilova, Irina**
  **Gyeonggi-do (KR)**
- **Hur, Sohyun**
  **Gyeonggi-do (KR)**
- **Song, Euihwan**
  **Gyeonggi-do (KR)**
- **Kim, Sungsoo**
  **Gyeonggi-do (KR)**

(74) Representative: **Killin, Stephen James et al**
**Venner Shipley LLP**
**20 Little Britain**
**London EC1A 7DH (GB)**

(56) References cited:
**EP-A1- 2 023 434** **US-A1- 2006 210 876**
**US-A1- 2007 243 463**

- **PROFATILOVA I A ET AL: "Electrochemical and thermal properties of graphite electrodes with imidazolium- and piperidinium-based ionic liquids" JOURNAL OF POWER SOURCES, ELSEVIER SA, CH, vol. 192, no. 2, 15 July 2009 (2009-07-15) , pages 636-643, XP026140147 ISSN: 0378-7753 [retrieved on 2009-03-27]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to an electrolyte for a lithium ion secondary battery and a Lithium ion secondary battery containing the electrolyte.

Lithium ion batteries have higher energy density and capacity per unit area than nickel-manganese and nickel-cadmium batteries. Thus, lithium ion batteries have lower self-discharge rates and longer service life as compared to nickel-manganese and nickel-cadmium batteries. In addition, lithium ion batteries are convenient to use and have long life characteristics due to the absence of memory effects. That is, the batteries do not have to be fully discharged before recharged. Lithium ion batteries, therefore, have gained popularity for these advantages.

When lithium ion batteries are exposed to high temperature, a solid electrolyte interface (SEI) film, which slowly degrades over time, can form on the surface of a negative electrode. As the film degrades, side reactions between exposed portions of the negative electrode surface and the surrounding electrolyte may continuously take place and release gases. This continuous gas release increases the internal pressure of the battery and can cause swelling of the battery.

Further, when a lithium ion secondary battery is overcharged, excessive precipitation and intercalation of lithium ions in the positive and negative electrodes, respectively, may occur thereby resulting in thermal instability. This thermal instability may induce rapid exothermic decomposition reactions between the electrodes and the electrolyte. In extreme cases, runaway reactions occur, and pose possible dangers of rupturing and fire to the battery.

Various methods have been proposed to solve the above problems. For example, the use of non-volatile ionic liquid with high boiling points have been proposed. However, large quantities of the ionic liquid can cause an increase in the viscosity of an organic electrolyte and permit the intercalation of cations of the ionic liquid together with lithium ions into the interlayers of a graphite negative electrode. Further, the ionic liquid undergoes severe reductive decomposition at the interface of the graphite negative electrode and the electrolyte forming an unstable film. The reductive decomposition of the ionic liquid also prevents smooth intercalation of lithium ions. Consequently, the ionic liquid reduces the available capacity of the graphite negative electrode, leading to a deterioration in the high-rate and/or cycle life characteristics of the battery.

EP2023434 describes an electrolyte comprising an ionic liquid and an aprotic dipolar solvent. The aprotic solvent is 20-60 vol.% based on the electrolyte preparation, and the conductivity of the electrolyte preparation is twice the conductivity of the ionic liquid. The electrolyte may also comprise an additive with a polymerizable functional group and a lithium salt.

The first aspect of the present invention is defined according to claim 1.

In an embodiment, the additive has a reduction potential higher than 0.7 V (vs. $Li/Li^+$) and an oxidation potential higher than 5.0 V (vs. $Li/Li^+$).

In one embodiment, the weight ratio of the ionic liquid to the additive ranges from 6:0.5 to 6:4.

The additive comprises a fluorine containing carbonate represented by Formula 18 and may further comprise a boron-containing lithium salt.

The additive may be present in an amount from 0.1 to 20 parts by weight based on 100 parts by weight of the electrolyte. The fluorine-containing carbonate may be present in an amount from 3 to 10 parts by weight based on 100 parts by weight of the electrolyte. The boron-containing lithium salt may be present in an amount from 0.1 to 5 parts by weight based on 100 parts by weight of the electrolyte.

The ionic liquid comprises an imide anion. In one embodiment, the ionic liquid is a combination of cations and anions. Non-limiting examples of suitable cations include ammonium, imidazolium, oxazolium, piperidinium, pyrazinium, pyrazolium, pyridazinium, pyridinium, pyrimidinium, pyrrolidinium, pyrrolinium, thriazolium, triazolium, guanidinium cations, and combinations thereof. Non-limiting examples of suitable anions include halogen, sulfate, sulfonate, amide, imide, borate, phosphate, antimonate, decanoate, cobalt tetracarbonyl anions, and combinations thereof.

In one embodiment, the ionic liquid may be present in an amount from 5 to 70 parts by weight and preferably from 5 to 40 parts by weight based on 100 parts by weight of the electrolyte.

According to a second aspect of the present invention, there is provided a lithium ion secondary battery, which includes an electrolyte according to the present invention in its first aspect, a positive electrode including positive electrode active materials capable of reversibly intercalating and deintercalating lithium ions, and a negative electrode including negative electrode active materials capable of reversibly intercalating and deintercalating lithium ions.

Further embodiments of the present invention in any of its various aspects are as defined below or as described in the sub-claims.

A more complete appreciation of the present invention, and many of the attendant advantages thereof, will be readily apparent as the same becomes better understood by reference to the following detailed description when considered in conjunction with the accompanying drawings, wherein:

FIGURE 1 is a partial cross-sectional view or a prismatic lithium ion secondary battery according to an embodiment

of the present invention;

FIGURE 2 is a graph illustrating the discharge capacities of lithium ion secondary batteries prepared according to Example 1 and Comparative Example 1 as a function of charge/discharge cycle;

FIGURE 3 is a graphs showing differential values of charge quantity as a function of voltage in charge/discharge cycle tests of lithium ion secondary batteries prepared according to Example 1 and Comparative Example 1;

FIGURE 4 shows the results of differential scanning calorimetric (DSC) measurements of batteries prepared according to Examples 1 and 2 and Comparative Example 1 after they were fully charged and cells of the batteries were disassembled; and

FIGURE 5 is a table showing thermal decomposition onset temperatures and heat outputs upon the DSC measurements of FIGURE 4.

The present invention provides an electrolyte for a lithium ion secondary battery, which includes a non- aqueous organic solvent, a Lithium salt, an ionic liquid, and an additive.

The ionic liquid is used to ensure improved overcharge safety and heat stability of the resulting battery.

A typical ionic salt compound (*e.g.*, salt) composed of a metal cation and a nonmetal anion is melted at a temperature as high as 800°C, whereas an ionic liquid is an ionic salt that exists in a liquid state at a temperature of 100°C or less. Particularly, the salts that are liquid at room temperature are referred to as room-temperature ionic liquids (RTIL). An ionic liquid has no vapor pressure because it is not volatile at room temperature and only evaporates at a temperature of 300°C or higher. Further, it has high ionic conductivity.

In the present invention, the electrolyte includes an ionic liquid that improves the overcharge safety and heat stability of a battery. Since the ionic liquid is not readily evaporated even at elevated temperatures, due to its high boiling point, no gas is released from the ionic liquid. The use of the ionic liquid in the electrolyte prevents an internal pressure build-up within the battery, resulting in no change in the thickness of the battery. Since the ionic liquid has no vapor pressure, the danger of fire or explosion of the battery can significantly be minimized or prevented.

The ionic liquid used in the present invention may include a cation and an anion. The inherent physical and chemical properties of the ionic liquid are greatly affected by the structures of the constituent ions and can be optimized based on the intended use.

Non-limiting examples of suitable cations of the ionic liquid include ammonium, imidazolium, oxazolium, piperidinium, pyrazinium, pyrazolium, pyridazinium, pyridinium, pyrimidinium, pyrrolidinium, pyrrolinium, thriazolium, triazolium, and guanidinium cations.

Specifically, the cation can be represented by one of Formula nos. 1 through 17:

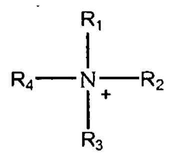

(1)

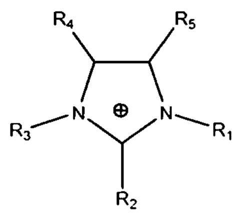

(2)

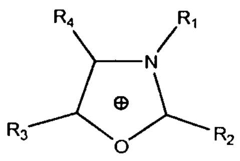

(3)

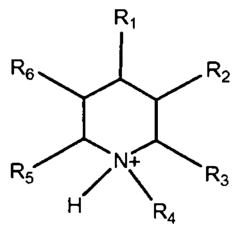

(4)

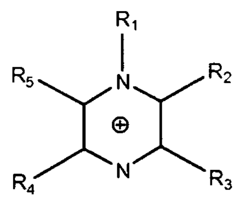

(5)

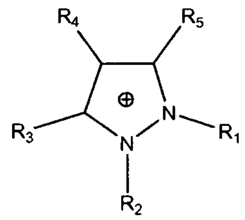

(6)

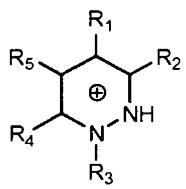

(7)

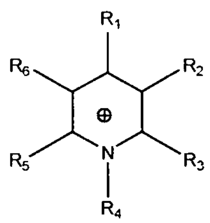

(8)

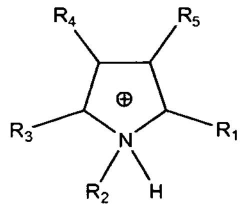

(9)

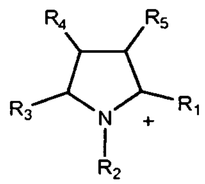

(10)

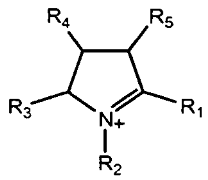

(11)

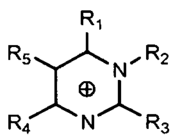

(12)

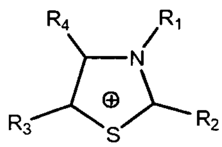

(13)

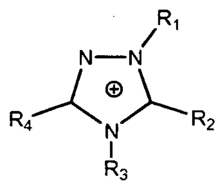

(14)

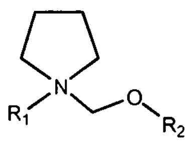

(15)

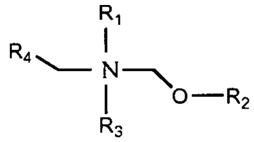

(16)

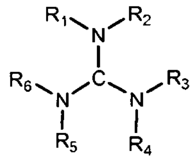

(17)

where, each of $R_1$ through $R_6$, is independently a $C_1$-$C_9$ alkyl group or a phenyl group.

In addition to these cations, cations that are commonly used in the art can also be used.

Non-Limiting examples of suitable anion of the ionic Liquid include halogen, sulfate, sulfonate, amide, imide, borate, phosphate, antimonate, decanoate and cobalt tetracarbonyl anions. Non-limiting examples of suitable anions include $F^-$, $Cl^-$, $Br^-$, $I^-$, $NO_3^-$, $N(CN)_2^-$, $ClO_4$ and $RSO_3^-$ (R = $C_1$-$C_9$ alkyl or phenyl), $RCOO^-$ (R = $C_1$-$C_9$ alkyl or phenyl), $PF_6^-$, $(CF_3)_2PF_4^-$, $(CF_3)_3PF^-_3$, $(CF_3)_4PF_2$, $(CF_3)_5PF^-$, $(CF_3)_6P^-$, $(CF_3SO_3^-)_2$, $(CF_2CF_2SO_3)_2$, $(CnF_{2n+1}SO_2)_2N^-$(n = 1~4), $CF_3CF_2(CF_5)_2CO^-$, $(CF_3SO_2)_2CH^-$, $BF_4^-$, bis(oxalato)borate (BOB) and fluoro(oxalato)borate (FOB).

In one embodiment, the ionic liquid may be present in an amount from 5 to 70 parts by weight, and preferably 5 to 40 parts by weight based on 100 parts by weight of the electrolyte. If the ionic liquid is added in an amount less than 5 parts by weight, improvements in overcharge safety and heat stability are negligible. It the ionic liquid is added in an amount more than 70 parts by weight, the electrolyte becomes viscous and may adversely impact the lithium ion mobility.

In the present invention, the additive used in the electrolyte has a lowest unoccupied molecular orbital (LUMO) level range from -0.5 to 1.0 eV, as calculated by the AM1 method, and a highest occupied molecular orbital (HOMO) level lower than -11.0 eV.

The ionic liquid helps improving the overcharge safety and heat stability of the battery. However, it induces reductive decomposition at the interface of the graphite negative electrode and the electrolyte. This reductive decomposition causes the decomposition products to cover the surface of the negative electrode and forms an unstable film. However, as the cations of the ionic liquid intercalate with the lithium ions into the graphite negative electrode, not only the cations can reduce the available capacity of the negative electrode, they can also cause the film to collapse or degrade after repeated charge/discharge cycles. As a result, the high-rate and the cycle life characteristics of the battery may deteriorate.

In one embodiment, the additive has a higher reduction potential than that of the ionic liquid. In that way, the additive is reduced first before reductive decomposition of ionic liquid at the interface between the negative electrode and is the organic electrolyte. The introduction of the additive prevents or reduces the reduction of the ionic liquid and formation of an unstable dim on the surface of the negative electrode, thereby preventing the deterioration of the high-rate and cycle life characteristics of the battery.

The reduction potential and lowest unoccupied molecular orbital (LUMO) theories may be used to select an additive that has a higher reduction potential than that of the ionic liquid (*i.e.,* the additive is reduced first before the ionic liquid is reduced). The LUMO level of the additive is associated with the reduction resistance of the additive. When a certain molecule accepts an electron, the electron occupies the lowest-energy level molecular orbital and the degree of reduction is determined by the energy level. The lower the Lump level is, the higher the degree of reduction. Conversely, the higher the LUMO level is, the better the reduction resistance (*i.e.*, lower reduction potential). In various embodiments, the ionic liquid has a reduction potential of about 0.4 to about 0.7 V (vs. Li/.$Li^+$). The additive that is reduced before the ionic liquid has a higher reduction potential and a lower LUMO level than those of the ionic liquid. The LUMO level of the additive is calculated by the AM1 method, which is a quantum chemical calculation method.

A material having a LUMO level of -0.5 eV or less cannot be used as an additive. The use of a material having a LUMO level of -0.5 eV can cause an over consumption of electrons during the reductive decomposition of the material. Therefore, tewer electrons are available for intercalating lithium ions into the graphite negative electrode. As a result, a reduction in the reversible capacity of the battery and/or of Coulomb efficiency of the battery may occur.

Accordingly, in certain embodiments, the LUMO level and the reduction potential of the additive are in the ranges of -0.5 eV to 1.0 eV and 0.7 V or higher, respectively.

In certain embodiments the additive has an oxidation potential of 5 V or more (vs. Li/$Li^+$) in order to be chemically stable in a common working voltage range (i.e., 3.0V-4.3 V) of a positive electrode of the battery. The highest occupied molecular orbital (HOMO) level of the additive is associated with the oxidation resistance of the additive. The higher the

HOMO level, the stronger the oxidation tendency. It is preferable to limit the HOMO level of the additive to less than -11.0 eV. The HOMO level of the additive can also be calculated by the AM1 method, which is a quantum chemical calculation method.

In the present invention, the additive has a LUMO level ranging from -0.5 to 1.0 eV and a HOMO level tower than -11.0 eV. The additive may have a reduction potential higher than 0.7 V and an oxidation potential higher than 5 V. If an additive has properties outside of the above specified ranges, a stable film cannot be formed on the surface of a negative electrode because the reductive decomposition of the ionic liquid cannot be prevented. As a result, unwanted oxidation reactions may occur within the positive electrode.

The fluorine-containing carbonate is a compound represented by Formula 18

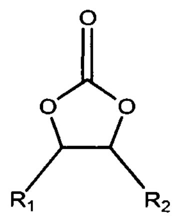

(18)

where, each of the $R_1$ and $R_2$ is independently selected from the group consisting of hydrogen, fluorine and fluorinated $C_1$-$C_5$ alkyl groups. Both $R_1$ and $R_2$ cannot be hydrogen;

Non-limiting examples of suitable fluorine-containing carbonates include fluoroethylene carbonates (FEC), difluoroethylene carbonates (DFEC), difluorodimethyl carbonates (FDMC), and fluoroethyl methyl carbonates (FEMC).

In one embodiment of the present invention, the electrolyte comprises a boron-containing lithium salt to improve overcharge safety and heat stability.

Non-limiting examples of suitable boron-containing lithium salts include lithium fluoro(oxalato)borate (LiFOB), and lithium bis(ovalato)borate.

In one embodiment, the weight ratio of the ionic liquid to the additive ranges from 6:0.5 to 6:4. If the weight ratio is less than the lower limit (*i.e.*, 6:0.5), the reductive decomposition of the ionic liquid cannot be prevented. If the weight ratio is more than the upper limit (*i.e.*, 6:4), the etectrolyte becomes viscous, resulting in a reduction in lithium ion mobility.

The additive may be added in an amount ranging from 0.1 to 20 parts by weight based on 100 parts by weight of the electrolyte. For example, the fluorine-containing carbonate may be present in an amount ranging from 3 to 10 parts by weight based on 100 parts by weight of the electrolyte. The boron-containing lithium salt may be present in an amount ranges from 0.1 to 5 parts by weight based on 100 parts by weight of the electrolyte. If the fluorine-containing carbonate is added in an amount less than 3 parts by weight or the boron-containing lithium salt is added in an amount less than 0.1 parts by weight, the reductive decomposition of the ionic liquid may not be sufficiently prevented and the high-efficiency properties and cycle life characteristics of the battery cannot be satisfactorily maintained. If the fluorine-containing carbonate is added in an amount more than 10 parts by weight or the boron-containing Lithium salt is added in an amount more than 5 parts by weight, the electrolyte becomes viscous, thereby resulting in a reduction of lithium ion mobility.

In one embodiment, the non-aqueous organic solvent in the electrolyte of the present invention functions as a medium for the ions in the electrochemical reactions of the battery to migrate.

Non-limiting examples of suitable non-aqueous organic solvents include carbonates, esters, ethers, ketones. Non-limiting examples of suitable carbonate-based solvents include dimethyl carbonates (DMC), diethyl carbonates (DEC), dipropyl carbonates (DPC), methyl propyl carbonates (MPC), ethyl propyl carbonates (EPC), ethyl methyl carbonates (EMC), ethylene carbonates (EC), propylene carbonates (PC) and butylene carbonates (BC). Non-limiting examples of suitable ester-based solvents include n-methyl acetate, n-ethyl acetate, n-propyl acetate, dimethyl acetate, methyl propionate, ethyl propionate, γ-butyrolactone, decanolide, valerolactone, mevalonolactone and caprolactone. Non-limiting examples of suitable ether-based solvents include dibutyl ether, tetraglyme, diglyme, dimethoxyethane, 2-methyltetrahydrofuran and tetrahydrofuran. Non-limiting examples of suitable ketone-based solvents include cyclohexanone and polymethyl vinyl ketone.

These non-aqueous organic solvents may be used alone or as a mixture of two or more thereof. The mixing ratio of two or more non-aqueous organic solvents may vary depending on the desired performance of the battery. Organic solvents have high dielectric constants and low viscosity; hence they can increase the dissociation degree of the ions, thus achieving smooth conduction of the ions. In certain embodiments, a mixture of a solvent with a high

dielectric constant and high viscosity and a solvent with a low dielectric constant and low viscosity is used. As for the carbonate-based solvents, a mixture of a cyclic carbonate and a chain carbonate is preferred. In one embodiment, the mixing ratio of the cyclic carbonate to the chain carbonate is preferably from 1:1 (v/v) to 1:9 (v/v).

The non-aqueous organic solvent may be a mixture of the carbonate-based solvent and an aromatic hydrocarbon-based organic solvent.

The aromatic hydrocarbon-based organic solvent may be represented by Formula 21:

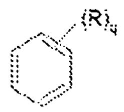

(21)

where, R is a halogen atom or a $C_1$-$C_{10}$ alkyl group and q is from 0 to 6.

Non-limiting examples of suitable aromatic hydrocarbon-based organic solvents include benzene, fluorobenzene, bromobenzene, chlorobenzene, toluene, xylene, and mesitylene, These organic solvents may be used alone or as a mixture thereof. When the volume ratio of the carbonate solvent to the aromatic hydrocarbon-based organic solvent is from 1:1 to 30:1, better results are obtained for safety, stability and ionic conductivity, which are important characteristics for electrolytes.

In one embodiment, the lithium salt used in the electrolyte provides a source of lithium ions to enable the basic operation of the Lithium ion secondary battery and to promote the mobility of the lithium ions between the positive electrode and the negative electrode. Non-limiting examples of lithium salts include $LiPF_6$, $LiBF_4$, $LiSbF_6$, $LiAsF_6$, $LiClO_4$, $LiCF_3SO_3$, $LiC_4F_9SO_3$, $LiAlO_4$, $LiAlCl_4$, $LiN(C_pF_{2p+1}SO_2)(C_qF_{2q+1}SO_2)$ (p and q are natural numbers), LiCl, and LiI. The lithium salt preferably has low lattice energy and a high degree of dissociation, which translates to high ionic conductivity, thermal stability and resistance to oxidation. The lithium salt may be present at a concentration of 0.1 to 2.0 M. If the lithium salt is present at a concentration less than 0.1 M, the conductivity of the electrolyte is low, resulting in deterioration in the performance of the electrolyte. If the lithium salt is present at a concentration more than 2.0 M, the electrolyte becomes viscous, resulting in a reduction in lithium ion mobility.

The present invention also provides a lithium ion secondary battery which comprises the electrolyte, a positive electrode plate, a negative electrode plate and a separator.

The positive electrode plate includes a positive electrode active material capable of reversibly intercalating/deintercalating lithium ions. The positive electrode active material is preferably a composite metal oxide of lithium and includes a metal selected from the group consisting of cobalt, manganese, nickel, and a mixture thereof. Any ratio of the metals can be employed with no particular restriction. In one embodiment, the positive electrode active material further includes a chemical element or compound. The chemical element or compound may be selected from the group consisting oF Fig, Al, Co, K, Na, Ca, Si, Ti, Sn, V, Ge, Ga, B, As, Zr, Mn, Cr, Fe, Sr, V, and rare earth elements.

The negative electrode plate includes a negative electrode active material capable of reversibly intercalating/deintercalating lithium ions. The negative electrode active material may further include a carbonaceous negative electrode active material, such as crystalline or amorphous carbons, carbon composites (*e.g.*, thermally decomposed carbons, coke or graphite), burned organic polymer compounds, carbon fibers, tin oxide compounds, lithium metals, or lithium alloys.

Non-Limiting examples of suitable amorphous carbons include hard carbons, coke, mesocarbon microbeads (MCMBs) calcined at 1,500°C or lower, and mesophase pitch-based carbon fibers (MPCFs). The crystalline carbon is a graphite-based material, and non-limiting examples of suitable crystalline carbons include natural graphite, graphitized coke, graphitized MCMBs, and graphitized MPCFs.

The positive electrode plate or the negative electrode plate can be produced by mixing the corresponding electrode active material, a binder, a conductive material, and optionally a thickener in a solvent to prepare an electrode slurry composition, and applying the slurry composition to an electrode collector. Aluminum or its alloy can be used as a positive electrode collector and copper or its alloy can be usually used as a negative electrode collector. The electrode collectors may be provided in the form of foils or meshes.

In one embodiment, a separator is used to prevent short circuits between the positive electrode plate and the negative electrode plate. Any known material may be used as the separator. Non-limiting examples of suitable materials include microporous films, woven fabrics, non-woven fabrics, polymer membranes, such as polyolefin, polypropylene, and polyethylene membranes, and multiple membranes thereof.

The lithium ion battery of the present invention may have the following cell structures, a unit cell composed of positive electrode plate/separator/negative electrode plate, a bicell composed of positive electrode plate/separator/negative electrode plate/separator/positive electrode plate, and a laminate cell composed of two or more repeating unit

cells. FIGURE 1 illustrates a representative structure of the lithium ion secondary battery 10 according to the present invention.

Referring to FIGURE 1, the prismatic lithium ion secondary battery 10 includes a can 11, an electrode assembly 12 in the can 11, and a cap assembly 20 coupled to an open upper end of the can 11 to seal the can 11. The can 11 is a prismatic metal case having a space therein.

The electrode assembly 12 includes a negative electrode plate 13, a separator 14 and a negative electrode plate 15 wound in the form of a 'jelly-roll'. A positive lead 16 and a negative lead 17 are drawn from the positive electrode plate 13 and the negative electrode plate 15, respectively.

The cap assembly 20 includes a cap plate 21 coupled to the top of the can 11, a negative terminal 23 inserted into the cap plate 21 via a gasket 22, an insulating plate 24 installed on the lower surface of the cap plate 21, and a terminal plate 25 installed on the lower surface of the insulating plate 24 to be in electrical communication with the negative terminal 23.

The cap plate 21 is formed with an electrolyte injection hole 26 to provide a passage through which the electrolyte is injected into the can 11. The electrolyte is injected through the electrolyte injection hole 26. After the completion of the electrolyte injection, the electrolyte injection hole 26 is closed by a ping 27.

An insulating case 18 is installed on the electrode assembly 12 within the can 11 to insulate the electrode assembly 12 from the cap assembly 20.

The type of the lithium ion battery is not limited to the prismatic structure. For example, the lithium ion battery of the present invention may be of any type, such as a cylinder or pouch type.

Hereinafter, the present invention mill be explained in detail with reference to the following examples, including comparative examples. However, these examples are given for the purpose of illustration and are not intended to limit the present invention.

## EXAMPLES

### Example 1

$LiCoO_2$ as a positive electrode active material, polyvinylidene fluoride (PVdF) as a binder and carbon as a conductive material were mixed in a 92:4:4 weight ratio in N-methyl-2-pyrrolidone to prepare a slurry for the positive electrode active material. The slurry was coated on an aluminum foil, dried, and rolled to produce a positive electrode plate. 97% by weight of artificial graphite as a negative electrode active material and 3% by weight of polyvinylidene fluoride (PVdF) as a binder were mixed and dispersed in water to prepare a slurry of the negative electrode active material. The slurry was coated on a copper foil, dried, and rolled to produce a negative electrode plate.

A separator made of polyethylene (PE) was inserted between the electrodes, wound, pressed, and inserted into a prismatic can (46 mm x 34 mm x 50 mm).

$LiPF_6$ was added to a mixed solvent of ethylene carbonate and ethyl methyl carbonate (3:7 (v/v)) until the final concentration reached 1.3 M, and 40 parts by weight of N-methyl propylpiperidinium bis(trifluoromethylsulfonyl)imide (MPPpTFSI) as an ionic liquid and 5 parts by weight of fluoroethylene carbonate (FEC) were added thereto to prepare an electrolyte. The electrolyte was injected into the can to make a lithium ion battery. * FEC : HOMO = -12.33eV, LUMO=0.983eV

### Example 2

A lithium ion secondary battery was prepared in the same manner as in Example 1 except that one part by weight of lithium fluoro(oxalato)borate was further added.

### Example 3

A lithium ion secondary battery was prepared in the same manner as in Example 1 except that 40 parts by weight of MPPTFSI(N-methyl propylpyrrolidinium bis(trifluoromethyl-sulfonyl)imide) was used as an ionic

### Example 4

A lithium ion secondary battery was prepared in the same manner as in Example 1 except that 40 parts by weight of MMDMEATFSI(N-methoxymethyl-N,N-dimethytethylammonium bis (trfluoromethanesulfonil)imide) was used as an ionic liquid.

**Comparative Example 1**

A lithium ion secondary battery was prepared in the same manner as in Example 1 except that FEC was not added to prepare the electrolyte.

DSC measurements were performed on the batteries prepared according to Examples 1 and 2 and Comparative Example 1. Changes in the discharge capacity of the batteries were measured during repeated charge/discharge cycles. Increments in the thickness of the batteries were measured after storing the batteries at a temperature of 60°C for 7 days. These measurements were made to evaluate the influence of the electrolytes, each of which uses an ionic liquid and an additive having a lower reduction potential than the ionic liquid, on the overcharge safety, heat stability, and cycle life characteristics of the batteries.

**Experimental Example 1**

After the batteries prepared according to Examples 1 to 4 and Comparative Example 1 were stored at 60°C for 7 days, the thickness increments of the batteries were measured.

The results are shown in Table 1.

$$\text{Thickness increment (\%)} = (B - A)/A$$

where, A is the initial thickness and B is the thickness after storing the batteries at 60°C for 7 days.

Table 1

| | Thickness increment (%) after storage at 60°C for 7 days |
|---|---|
| Example 1 | 23 |
| Example 2 | 16 |
| Examples 3 | 12 |
| Example 4 | 15 |
| Comparative Example 1 | 72 |

**Experimental Example 2**

The batteries fabricated in Example 1 and Comparative Example 1 were charged with constant current of 0.5C until its voltage reached to 4.2V. The batteries were subsequently charged with constant voltage of 4.2V until the total charging time reached 3 hours at room temperature. Then the batteries were discharged with a constant current of 1C until its voltage reached to 3.0V. Where, 'C' is a unit of 'C-rate', which is a charge or discharge current rate of a battery expressed in amperes.

The discharge capacity of each battery was measured after 10, 20 and 30 cycle of charging/discharging. The results are shown in FIGURE 2. The graph of FIGURE 2 shows that the discharge capacity of the battery fabricated in Example 1 using the ionic liquid and FEC was maintained during charge/discharge cycles, indicating improved cycle life characteristics compared to the battery of Comparative Example 1.

**Experimental Example 3**

Charge/discharge cycle tests were conducted on the batteries prepared in Example 1 and Comparative Example 1. The differential values of charge quantity as a function of voltage were calculated. The results are shown in FIGURE 3. The graph shows that peaks corresponding to the reductive decomposition of the ionic liquid (MPPpTFSI) in the battery of Comparative Example 1 were observed in the range of 0.4-0.7 V, whereas no peak was observed in the battery of Example 1 using FEC in the voltage range, indicating that FEC prevented the reductive decomposition of the ionic liquid.

**Experimental Example 4**

The batteries prepared in Examples 1 and 2 and Comparative Example 1 were fully charged and the cells were disassembled. The thermal characteristics of the charged graphite negative electrodes containing the respective electrolytes were analyzed using a DSC method. The results are shown in FIGURES 4 and 5.

FIGURE 4 shows that a reference electrolyte containing no ionic liquid began to release heat at 70°C and a large amount of heat was released at 200°C and higher due to an exothermic decomposition reaction of the fully-charged graphite negative electrode and the electrolyte. The thermal characteristics between the electrolyte containing 40 parts by weight of the ionic liquid (MPPpTFSI) and the fully-charged graphite negative electrode of the battery fabricated in Comparative Example 1 were measured. A large amount of heat began to be released at 70°C due to a thermally unstable film formed on the surface of the negative electrode by the reductive decomposition of the ionic liquid (MPPp-TFSI).

It is noticeable that the total heat output due to the decomposition reaction between the fully-charged graphite negative electrode and the electrolyte was decreased from 517 J/g to 387 J/g by the introduction of the ionic liquid (FIGURE 5). The additive (FEC) introduced to remove the reductive decomposition of the ionic liquid and induce the formation of a stable film on the surface of negative electrode increased the thermal decomposition onset temperature by 18°C (i.e., from 70°C to 88°C) and decreased the total heat output from 387 J/g to 359 J/g, as shown in FIGURES 4 and 5.

The thermal decomposition onset temperature of the electrolyte containing LiFOB and the ionic liquid (Example 2) was 100°C, which was 30°C higher than that (70°C) of the electrolyte (Comparative Example 1), and the total heat output was appreciably decreased from 387 J/g (Comparative Example 1) to 301 J/g (Example 2).

The batteries of Examples 1 and 2 showed improvements in heat stability, high-efficiency properties, and cycle life characteristics.

As apparent from the above description, the electrolyte of the present invention undergoes little decomposition and evaporation upon overcharge or during high-temperature storage thereby reducing the danger of fire or combustion of the battery. In addition, the use of a high boiling point ionic liquid that is not readily evaporated even at high temperature in the electrolyte prevents an increase in the internal pressure of the battery, resulting in no change in the thickness of the battery. That is, the electrolyte of the present invention improves the overcharge safety and the heat stability of the battery. Furthermore, the high-efficiency properties and cycle life characteristics of the battery are not deteriorated due to improved heat stability of the battery and the formation of a stable film on the surface of the negative electrode.

## Claims

**1.** An electrolyte for a lithium ion secondary battery, comprising:

a non-aqueous organic solvent;
a lithium salt;
an ionic liquid comprising an imide anion; and

an additive having a lowest unoccupied molecular orbital (LUMO) level of -0.5 to 1.0 eV and a highest occupied molecular orbital (HOMO) level lower than -11.0 eV, as calculated by the Austin Model 1 (AM1) method., wherein the additive comprises a fluorine-containing carbonate represented by Formula 18:

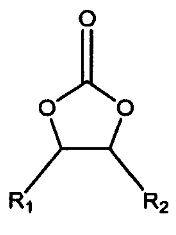

(18)

wherein each of $R_1$ and $R_2$ is independently selected from the group consisting of hydrogen, fluorine and fluorinated $C_1$-$C_5$ alkyl groups, with the proviso that both $R_1$ and $R_2$ are not hydrogen.

**2.** The electrolyte according to claim 1, wherein the additive has a reduction potential higher than 0.7 V and an oxidation potential higher than 5.0 V.

**3.** The electrolyte according to claims 1 or 2, wherein the additive comprises a boron-containing lithium salt.

**4.** The electrolyte according to claim 3, wherein the boron-containing lithium salt is selected from the group consisting of lithium bis(oxalato)borate, lithium fluoro(oxalato)borate, and combinations thereof.

5. The electrolyte according to any one of the preceding claims, wherein the additive is present in an amount from 0.1 to 20 parts by weight based on 100 parts by weight of the electrolyte.

6. The electrolyte according to any one of the preceding claims, wherein: the additive is a fluorine-containing carbonate represented by formula 18 present in an amount from 3 to 10 parts by weight based on 100 parts by weight of the electrolyte 7.

7. The electrolyte according to any of claims 3 to 6 wherein the boron-containing lithium salt is present in an amount from 0.1 to 5 parts by weight based on 100 parts by weight of the electrolyte.

8. The electrolyte according to any one of the preceding claims, wherein the weight ratio of the ionic liquid to the additive is from 6:0.5 to 6:4.

9. The electrolyte according to any one of the preceding claims, wherein the ionic liquid is a combination of a cation selected from the group consisting of ammonium, imidazolium, oxazolium, piperidinium, pyrazinium, pyrazolium, pyridazinium, pyridinium, pyrimidinium, pyrrolidinium, pyrrolinium, thriazolium, triazolium, and guanidinium cations, and an imide anion.

10. The electrolyte according to any one of the preceding claims, wherein the ionic liquid is present in an amount from 5 to 70 parts by weight based on 100 parts by weight of the electrolyte.

11. The electrolyte according to claim 10, wherein the ionic liquid is present in an amount from 5 to 40 parts by weight based on 100 parts by weight of the electrolyte.

12. The electrolyte according to any one of the preceding claims, wherein the non-aqueous organic solvent is selected from the group consisting of carbonates, esters, ethers, ketones, and combinations thereof.

13. The electrolyte according to claim 12 wherein the carbonate is selected from the group consisting of dimethyl carbonates, diethyl carbonates, dipropyl carbonates, methyl propyl carbonates, ethyl propyl carbonates, ethyl methyl carbonates, ethylene carbonates, propylene carbonates, butylene carbonates, pentylene carbonates, and combinations thereof.

14. The electrolyte according to claim 12 wherein
the ester is selected from the group consisting of n-methyl acetate, n-ethyl acetate, n-propyl acetate, dimethyl acetate, methyl propionate, ethyl propionate, y-butyrolactone, decanolide, valerolactone, mevalonolactone, caprolactone, and combinations thereof.

15. The electrolyte according to claim 12 wherein the ether is selected from the group consisting of dibutyl ether, tetraglyme, diglyme, dimethoxyethane, 2-methyltetrahydrofuran, tetrahydrofuran, and combinations thereof.

16. The electrolyte according to claim 12 wherein the ketone is selected from the group consisting of cyclohexanone, polymethyl vinyl ketone, and combinations thereof.

17. The electrolyte according to any one of the preceding claims, wherein the lithium salt is selected from the group consisting of $LiPF_6$, $LiBF_4$, $LiSbF_6$, $LiAsF_6$, $LiClO_4$, $LiCF_3SO_3$, $LiC_4F_9SO_3$, $LiAlO_4$, $LiAlCl_4$, $LiN(C_pF_{2p+1}SO_2)(C_qF_{2q+1}SO_2)$, where p and q are natural numbers, LiCl, LiI, and combinations thereof.

18. A lithium ion secondary battery, comprising:

a positive electrode including a positive electrode active material capable of reversibly intercalating/deintercalating lithium ions;
a negative electrode including a negative electrode active material capable of reversibly intercalating/deintercalating lithium ions; **characterized in that** the battery comprises the electrolyte of any one of claims 1 to 17.

## Patentansprüche

1. Elektrolyt für eine Lithiumion-Sekundärbatterie, aufweisend:

ein nicht-wässriges organisches Lösungsmittel;
ein Lithiumsalz;
eine ionische Flüssigkeit, die ein Imidanion aufweist; und

ein Additiv, das nach der Berechnung mit der Austin-Model-1 (AM1)-Methode ein Niveau eines niedrigsten unbesetzten Molekülorbitals (LUMO) von -0,5 bis 1,0 eV und ein Niveau eines höchsten besetzten Molekülorbitals (HOMO), das niedriger als -11,0 eV ist, aufweist, wobei das Additiv ein Fluor enthaltendes Carbonat aufweist, das durch Formel 18 dargestellt ist:

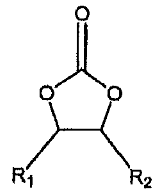

(18)

wobei sowohl $R_1$ als auch $R_2$ unabhängig voneinander aus der Gruppe bestehend aus Wasserstoff, Fluor und fluorierten $C_1$-$C_5$-Alkylgruppen ausgewählt ist, mit der Maßgabe, dass sowohl $R_1$ als auch $R_2$ kein Wasserstoff ist.

2. Elektrolyt nach Anspruch 1, wobei das Additiv ein Redoxpotential aufweist, das höher als 0,7 V ist und ein Oxidationspotential, das höher als 5,0 V ist.

3. Elektrolyt nach Anspruch 1 oder 2, wobei das Additiv ein Bor enthaltendes Lithiumsalz aufweist.

4. Elektrolyt nach Anspruch 3, wobei das Bor enthaltende Lithiumsalz aus der Gruppe bestehend aus Lithium-bis (oxalato)borat, Lithiumfluoro(oxalato)borat und Kombinationen derselben ausgewählt ist.

5. Elektrolyt nach einem der vorhergehenden Ansprüche, wobei das Additiv in einer Menge von 0,1 bis 20 Gewichtsteilen, bezogen auf 100 Gewichtsteile des Elektrolyts, vorliegt.

6. Elektrolyt nach einem der vorhergehenden Ansprüche, wobei:

das Additiv ein durch Formel 18 dargestelltes Fluor enthaltendes Carbonat ist, das in einer Menge von 3 bis 10 Gewichtsteilen, bezogen auf 100 Gewichtsteile des Elektrolyts 7, vorliegt.

7. Elektrolyt nach einem der Ansprüche 3 bis 6, wobei das Bor enthaltende Lithiumsalz in einer Menge von 0,1 bis 5 Gewichtsteilen, bezogen auf 100 Gewichtsteile des Elektrolyts, vorliegt.

8. Elektrolyt nach einem der vorhergehenden Ansprüche, wobei das Gewichtsverhältnis der ionischen Flüssigkeit zum Additiv von 6:0,5 bis 6:4 beträgt.

9. Elektrolyt nach einem der vorhergehenden Ansprüche, wobei die ionische Flüssigkeit eine Kombination eines Kations ist, das aus der Gruppe bestehend aus Ammonium, Imidazolium, Oxazolium, Piperidinium, Pyrazinium, Pyrazolium, Pyridazinium, Pyridinium, Pyrimidinium, Pyrrolidinium, Pyrrolinium, Thriazolium, Triazolium und Guanidinium-Kationen und einem Imidanion ausgewählt ist.

10. Elektrolyt nach einem der vorhergehenden Ansprüche, wobei die ionische Flüssigkeit in einer Menge von 5 bis 70 Gewichtsteilen, bezogen auf 100 Gewichtsteile des Elektrolyts, vorliegt.

11. Elektrolyt nach Anspruch 10, wobei die ionische Flüssigkeit in einer Menge von 5 bis 40 Gewichtsteilen, bezogen auf 100 Gewichtsteile des Elektrolyts, vorliegt.

12. Elektrolyt nach einem der vorhergehenden Ansprüche, wobei das nichtwässrige organische Lösungsmittel aus der Gruppe bestehend aus Carbonaten, Estern, Ethern, Ketonen und Kombinationen derselben ausgewählt ist.

**13.** Elektrolyt nach Anspruch 12, wobei das Carbonat aus der Gruppe bestehend aus Dimethylcarbonaten, Diethylcarbonaten, Dipropylcarbonaten, Methylpropylcarbonaten, Ethylpropylcarbonaten, Ethylmethylcarbonaten, Ethylencarbonaten, Proyplencarbonaten, Butylencarbonaten, Pentylencarbonaten und Kombinationen derselben ausgewählt ist.

**14.** Elektrolyt nach Anspruch 12, wobei
der Ester aus der Gruppe bestehend aus n-Methylacetat, n-Ethylacetat, n-Propylacetat, Dimetyhlacetat, Methylpropionat, Ethylpropionat, γ-Butyrolacton, Decanolid, Valerolacton, Mevalonolacton, Caprolacton und Kombinationen derselben ausgewählt ist.

**15.** Elektrolyt nach Anspruch 12, wobei der Ether aus der Gruppe bestehend aus Dibutylether, Tetraglyme, Diglyme, Dimethoxyethan, 2-Methyltetrahydrofuran, Tetrahydrofuran und Kombinationen derselben ausgewählt ist.

**16.** Elektrolyt nach Anspruch 12, wobei das Keton aus der Gruppe bestehend aus Cyclohexanon, Polymethylvinylketon und Kombinationen derselben ausgewählt ist.

**17.** Elektrolyt nach einem der vorhergehenden Ansprüche, wobei das Lithiumsalz aus der Gruppe bestehend aus $LiPF_6$, $LiBF_4$, $LiSbF_6$, $LiAsF_6$, $LiClO_4$, $LiCF_3SO_3$, $LiC_4F_9SO_3$, $LiAlO_4$, $LiAlCl_4$, $LiN(C_pF_{2p+1}SO_2)(C_qF_{2q+1}SO_2)$, wobei p und q natürliche Zahlen sind, LiCl, LiI und Kombinationen derselben ausgewählt ist.

**18.** Lithiumion-Sekundärbatterie, aufweisend:

eine positive Elektrode, die ein positives aktives Elektrodenmaterial aufweist, das zur reversiblen Interkalation/Deinterkalation von Lithiumionen ausgebildet ist;
eine negative Elektrode, die ein negatives aktives Elektrodenmaterial aufweist, das zur reversiblen Interkalation/Deinterkalation von Lithiumionen ausgebildet ist, **dadurch gekennzeichnet, dass** die Batterie den Elektrolyt nach einem der Ansprüche 1 bis 17 aufweist.

## Revendications

**1.** Electrolyte pour une batterie d'accumulateurs à ions lithium, comprenant :

un solvant organique non aqueux ;
un sel de lithium ;
un liquide ionique comprenant un anion imide ; et
un additif ayant un niveau d'orbitale moléculaire non occupée la plus basse (LUMO) de -0,5 à 1,0 eV et un niveau d'orbitale moléculaire occupée la plus élevé (HOMO) inférieur à -11,0 eV, de la manière calculée par la méthode Austin Model 1 (AM1), dans lequel l'additif comprend un carbonate contenant du fluor représenté par la formule 18 :

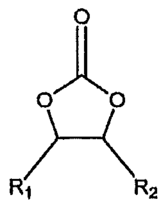

(18)

dans laquelle chacun de $R_1$ et $R_2$ est choisi indépendamment dans le groupe consistant en un atome d'hydrogène ou de fluor et des groupes alkyle en $C_1$ à $C_5$ fluorés, sous réserve que $R_1$ et $R_2$ ne représentent pas tous deux un atome d'hydrogène.

**2.** Electrolyte suivant la revendication 1, dans lequel l'additif a un potentiel de réduction supérieur à 0,7 V et un potentiel d'oxydation supérieur à 5,0 V.

**3.** Electrolyte suivant la revendication 1 ou 2, dans lequel l'additif comprend un sel de lithium contenant du bore.

**4.** Electrolyte suivant la revendication 3, dans lequel le sel de lithium contenant du bore est choisi dans le groupe consistant en le bis(oxalato)borate de lithium, le fluoro(oxalato)borate de lithium et leurs associations.

**5.** Electrolyte suivant l'une quelconque des revendications précédentes, dans lequel l'additif est présent en une quantité de 0,1 à 20 parties en poids sur la base de 100 parties en poids de l'électrolyte.

**6.** Electrolyte suivant l'une quelconque des revendications précédentes, dans lequel:

l'additif est un carbonate contenant du fluor représenté par la formule 18 présent en une quantité de 3 à 10 parties en poids sur la base de 100 parties en poids de l'électrolyte.

**7.** Electrolyte suivant l'une quelconque des revendications 3 à 6, dans lequel le sel de lithium contenant du bore est présent en une quantité de 0,1 à 5 parties en poids sur la base de 100 parties en poids de l'électrolyte.

**8.** Electrolyte suivant l'une quelconque des revendications précédentes, dans lequel le rapport pondéral du liquide ionique à l'additif va de 6:0,5 à 6:4.

**9.** Electrolyte suivant l'une quelconque des revendications précédentes, dans lequel le liquide ionique est une association d'un cation choisi dans le groupe consistant en les cations ammonium, imidazolium, oxazolium, pipéridinium, pyrazinium, pyrazolium, pyridazinium, pyridinium, pyrimidinium, pyrrolidinium, pyrrolinium, thriazolium, triazolium et guanidinium et d'un anion imide.

**10.** Electrolyte suivant l'une quelconque des revendications précédentes, dans lequel le liquide ionique est présent en une quantité de 5 à 70 parties en poids sur la base de 100 parties en poids de l'électrolyte.

**11.** Electrolyte suivant la revendication 10, dans lequel le liquide ionique est présent en une quantité de 5 à 40 parties en poids sur la base de 100 parties en poids de l'électrolyte.

**12.** Electrolyte suivant l'une quelconque des revendications précédentes, dans lequel le solvant organique non aqueux est choisi dans le groupe consistant en des carbonates, des esters, des éthers, des cétones et leurs associations.

**13.** Electrolyte suivant la revendication 12, dans lequel le carbonate est choisi dans le groupe consistant en des carbonates de diméthyle, des carbonates de diéthyle, des carbonates de dipropyle, des carbonates de méthylpropyle, des carbonates d'éthylpropyle, des carbonates d'éthylméthyle, des carbonates d'éthylène, des carbonates de propylène, des carbonates de butylène, des carbonates de pentylène et leurs associations.

**14.** Electrolyte suivant la revendication 12, dans lequel l'ester est choisi dans le groupe consistant en l'acétate de n-méthyle, l'acétate de n-éthyle, l'acétate de n-propyle, l'acétate de diméthyle, le propionate de méthyle, le propionate d'éthyle, la $\gamma$-butyrolactone, le décanolide, la valérolactone, la mévalonolactone, la caprolactone et leurs associations.

**15.** Electrolyte suivant la revendication 12, dans lequel l'éther est choisi dans le groupe consistant en l'éther dibutylique, le tétraglyme, le diglyme, le diméthoxy-éthane, le 2-méthyltétrahydrofuranne, le tétrahydrofuranne et leurs associations.

**16.** Electrolyte suivant la revendication 12, dans lequel la cétone est choisie dans le groupe consistant en la cyclohexanone, la polyméthylvinylcétone et leurs associations.

**17.** Electrolyte suivant l'une quelconque des revendications précédentes, dans lequel le sel de lithium est choisi dans le groupe consistant en $LiPFE_6$, $LiBF_4$, $LiSbF_6$, $LiAsF_6$, $LiClO_4$, $LiCF_3SO_3$, $LiC_4F_9SO_3$, $LiAlO_4$, $LiAlCl_4$, $LiN(C_pF_{2p+1}SO_2)(C_qF_{2q+1}SO_2)$, où p et q représentent des nombres entiers, LiCl, LiI et leurs associations.

**18.** Batterie d'accumulateurs à ions lithium, comprenant :

une électrode positive comprenant une matière active d'électrode positive apte à l'intercalation/désintercalation de manière réversible des ions lithium ;
une électrode négative comprenant une matière active d'électrode négative apte à l'intercalation/désintercalation de manière réversible des ions lithium ; ladite batterie étant **caractérisée en ce qu'**elle comprend l'électrolyte de l'une quelconque des revendications 1 à 17.

FIGURE 1

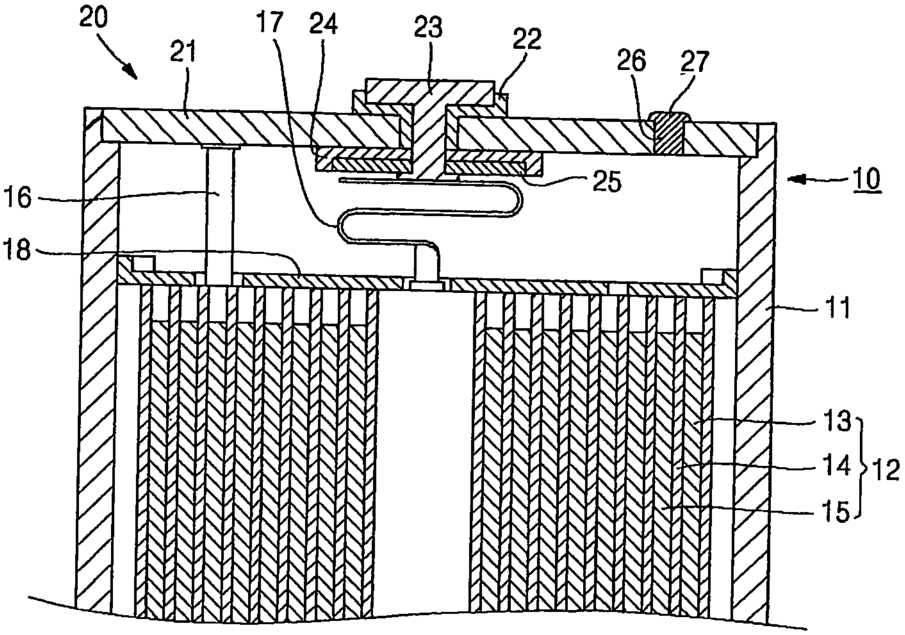

FIGURE 2

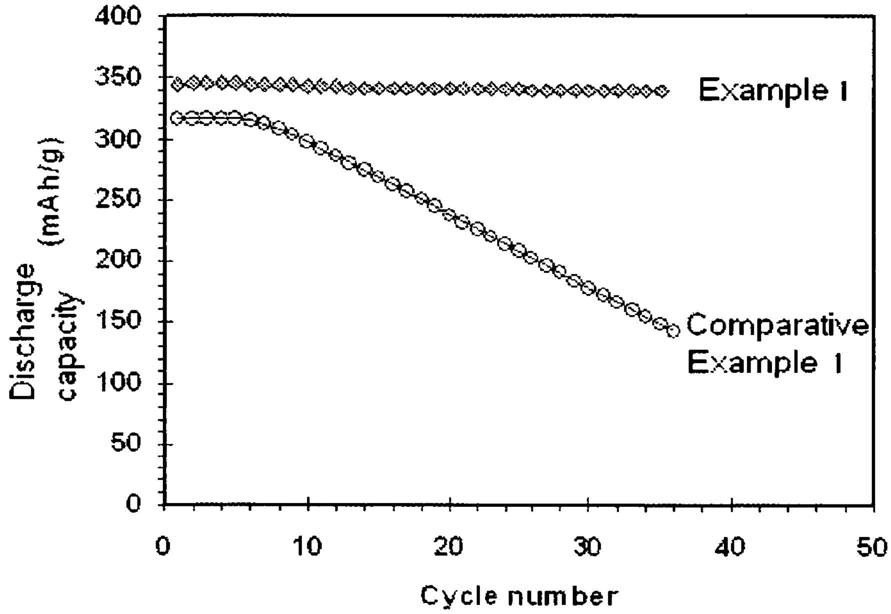
400
350
300
250
200
150
100
50
0
Discharge capacity (mAh/g)
0
10
20
30
40
50
Cycle number
Example 1
Comparative Example 1

FIGURE 3

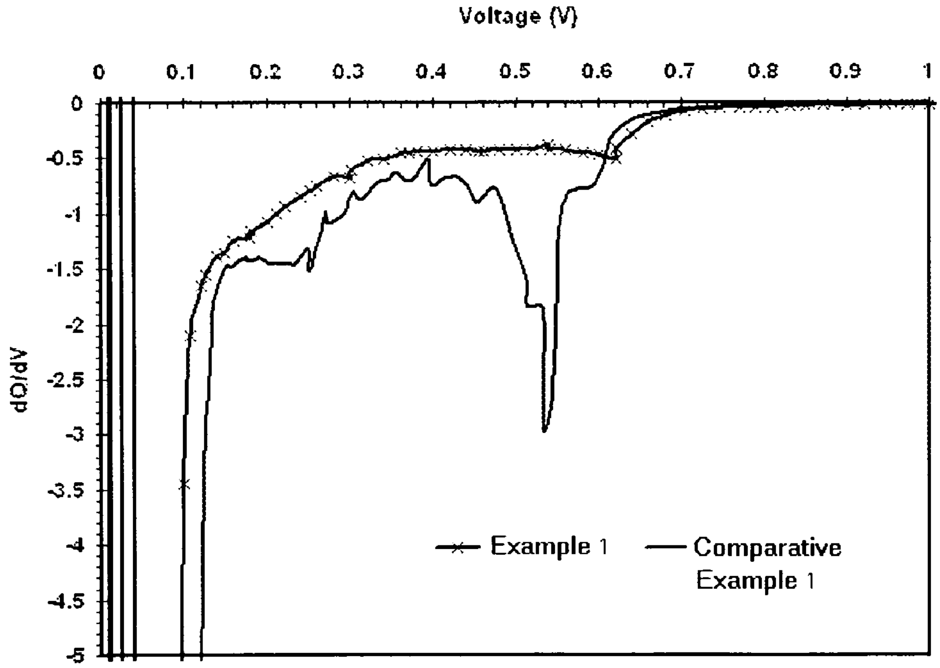
Voltage (V)
0
0.1
0.2
0.3
0.4
0.5
0.6
0.7
0.8
0.9
1
0
-0.5
-1
-1.5
-2
-2.5
-3
-3.5
-4
-4.5
-5
dQ/dV
Example 1
Comparative Example 1

FIGURE 4

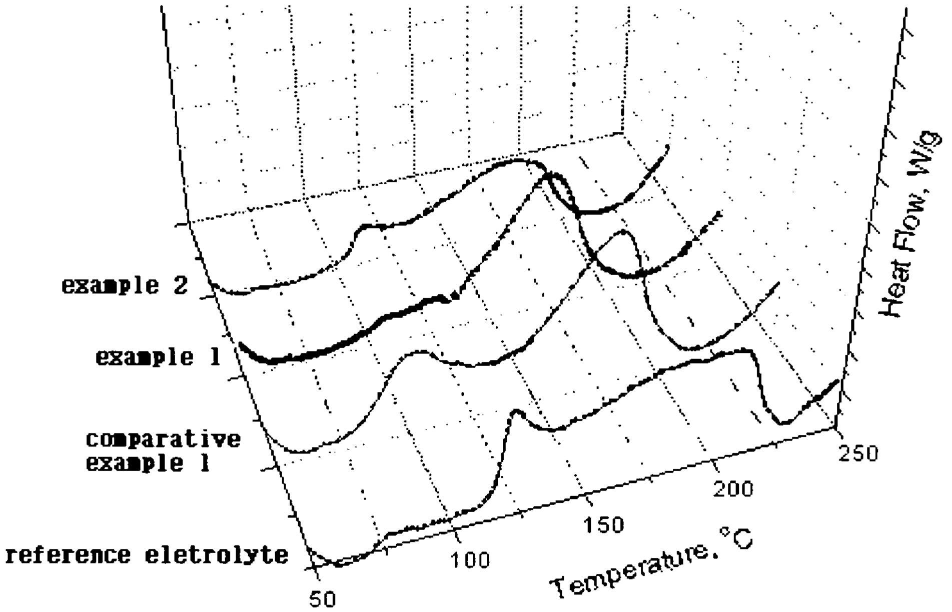
example 2
example 1
comparative example 1
reference eletrolyte
50
100
150
200
250
Temperature, °C
Heat Flow, W/g

FIGURE 5

| Electrolyte abbreviation | Only powder in DSC pan | | Powder electrolyte in DSC pan | |
|---|---|---|---|---|
| | Onset T, °C | Ave. total heat output, J/g | Onset T, °C | Ave. total heat output, J/g |
| Reference electrolyte | 213 | 274 | ~70 | 517 |
| Comparative Example 1 | 70 | 431 | ~70 | 387 |
| Example 1 | 246 | 351 | 88 | 359 |
| Example 2 | 186 | 285 | 100 | 301 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2023434 A